# EUROPÄISCHE PATENTSCHRIFT

(11) **EP 0 763 276 B1**
(45) Veröffentlichungstag und Bekanntmachung des Hinweises auf die Patenterteilung: **16.08.2001**
(21) Anmeldenummer: 95917913.6
(22) Anmeldetag: 17.05.1995
(51) Int. Cl.: H02M 1/12, H05B 41/282

(54) **GETAKTETE STROMVERSORGUNG ZUM BETREIBEN ELEKTRISCHER LAMPEN**
SWITCHING POWER SUPPLY FOR THE OPERATION OF ELECTRIC LAMPS
ALIMENTATION ELECTRIQUE A DECOUPAGE DESTINEE AU FONCTIONNEMENT DE LAMPES ELECTRIQUES

(30) Priorität: 30.05.1994 DE 4418886
(43) Veröffentlichungstag der Anmeldung: 19.03.1997
(73) Patentinhaber: Patent-Treuhand-Gesellschaft für elektrische Glühlampen mbH, 81543 München (DE)
(72) Erfinder: LECHELER, Reinhard, D-86633 Neuburg an der Donau (DE); RAISER, Frank, D-81379 München (DE)
(86) Internationale Anmeldenummer: DE9500653
(87) Internationale Veröffentlichungsnummer: WO9533299

(56) Entgegenhaltungen:
- EP-A- 0 444 428
- US-A- 4 625 270
- PATENT ABSTRACTS OF JAPAN vol. 8, no. 256 (E-280) 22. November 1984 & JP,A,59 129 571 (TDK) 25. Juli 1984

## Beschreibung

Die Erfindung betrifft getaktete Stromversorgungen zum Betreiben elektrischer Lampen an einem Wechselspannungsnetz oder einer Gleichspannungsquelle gemäß dem Oberbegriff des Anspruchs 1.

Diese Art von getakteten Stromversorgungen eignet sich sowohl zum Betreiben von Entladungslampen, insbesondere Leuchtstofflampen und Hochdrucklampen als auch zum Betreiben von Glühlampen, z.B. Niedervolt-Halogenglühlampen. Getaktete Stromversorgungen für den Betrieb von Entladungslampen werden im allgemeinen als elektronische Vorschaltgeräte (EVG) bezeichnet, während für den Betrieb von Niedervolt-Halogenglühlampen die Bezeichnung elektronischer Transformator oder elektronischer Konverter gebräuchlich ist.

Von einem Wechselspannungsnetz gespeiste getaktete Stromversorgungen werden auch als Schaltnetzteile bezeichnet. Ist eine getaktete Stromversorgung an eine Gleichspannungsquelle angeschlossen, beispielsweise an eine Batterie, so spricht man auch von einem Gleichstromwandler. Ferner ist es möglich, zwei oder mehr getaktete Stromversorgungen in der Art einer Kaskadenschaltung zu verbinden, wobei jeweils der Ausgang der vorstehenden mit dem Eingang der nachfolgenden Stromversorgung verbunden ist. In der EP-A 0 485 865 ist z.B. eine Schaltungsanordnung zum Betreiben einer Entladungslampe gezeigt. Die Schaltungsanordnung ist von einer Gleichspannungsquelle, beispielsweise einem Kfz-Bordnetz gespeist und weist einen Hochsetzsteller (Aufwärtsregler) und optional einen nachgeschalteten Wechselrichter für den Wechselstrombetrieb einer Entladungslampe auf.

Ein wesentliches Merkmal getakteter Stromversorgungen ist mindestens ein Schaltteil mit einem oder mehreren schnellen Schaltern - in der Regel werden dafür schnelle Schalttransistoren verwendet. Das Schaltteil kann - wie beispielsweise in W. Hirschmann und A. Hauenstein: "Schaltnetzteile", Siemens AG, Berlin, 1990, S. 40ff erläutert - als Drosselwandler (Abwärts-, Aufwärts-, Aufwärts-Abwärtsregler, Inverter), Sperrwandler, Durchflußwandler oder Gegentaktwandler (in Halb- und Vollbrückenschaltung) realisiert sein. Das Schaltteil wandelt die Spannung an seinem Eingang, z.B. die gleichgerichtete Netzspannung oder die Ausgangsspannung eines vorgeschalteten Wandlers, in eine hochfrequent getaktete Spannung. Dadurch entstehen, insbesondere im Bereich der Schalter schnelle Potentialänderungen gegenüber der geerdeten Gehäusemasse (Geräte der Schutzklasse I) oder der Umgebung bzw. Erde (Geräte der Schutzklasse II). Die mit den Potentialänderungen verbundenen zeitveränderlichen elektrischen Felder können über kapazitive Kopplungen Gleichtakt-Störströme influenzieren, die beispielsweise auf den Netzzuleitungen und durch die getaktete Stromversorgung fließen. Die Störstromschleife ist dabei über parasitäre Kapazitäten im wesentlichen zwischen Schaltteil und Erde geschlossen. Eine ausführliche Beschreibung der Entstehung von Funkstörungen findet sich beispielsweise in W. Hirschmann und A. Hauenstein: "Schaltnetzteile", Siemens AG, Berlin, 1990, S. 72ff. Bezüglich der Grenzwerte für Funkstörungen bei getakteten Stromversorgungen ist die VDE-Bestimmung 0871 und speziell für elektrische Betriebsgeräte für Lampen die VDE 0875 - sie entspricht der internationalen Norm CISPR 15 - einzuhalten.

Eine gebräuchliche Maßnahme zur Unterdrückung von Gleichtakt-Störströmen besteht darin, ein Entstörfilter, z.B. eine stromkompensierte Drossel in die Netzzuleitungen zu schalten. Die Auslegung stromkompensierter Drosseln ist beispielsweise in O. Kilgenstein: "Schaltnetzteile in der Praxis", Vogel Buchverlag, Würzburg, 1986, S. 355ff erläutert. Ihre Wirkung beruht darauf, daß der netzfrequente Nutzstrom ungedämpft passieren kann. Hochfrequente Gleichtakt-Störströme hingegen werden durch die hohe Induktivität der stromkompensierten Drossel ausgefiltert. Einem kompakten Aufbau sind allerdings Grenzen gesetzt, da durch unmittelbar benachbarte Bauteile und deren Störsignale die entstörende Wirkung einer stromkompensierten Drossel vermindert oder sogar - insbesondere aufgrund magnetischer Störfelder - in eine gegenteilige Wirkung umgekehrt werden kann.

Bei Geräten der Schutzklasse I können zusätzlich Y-Kondensatoren von den Netzzuleitungen gegen den Schutz- bzw. Erdleiter geschaltet sein, wodurch zumindest ein Teil der Gleichtakt-Störströme zur Erde abfließen kann. Bei Geräten der Schutzklasse II besteht diese Möglichkeit nicht.

In der JP 59129571 ist ein Schaltnetzteil mit einem Netzgleichrichter und einem Ausgangsübertrager mit ungeerdeter Sekundärseite offenbart. Die Primärseite des Ausgangsübertragers weist eine Zusatzwindung auf. Die beiden Pole der Zusatzwindung sind mit einem Anschluß des Netzgleichrichters bzw. über zwei Kondensatoren mit einem Pol der Sekundärseite des Ausgangsübertragers verbunden. Durch die Zusatzwindung wird eine Spannung erzeugt, deren Phase bezüglich der Phase der Ausgangsspannung invertiert ist. Dadurch kann bei geeigneter Dimensionierung der Zusatzwindung und der Kondensatoren die Ausgangsspannung symmetriert werden. Auf diese Weise sollen von den Ausgangsleitungen ausgehende Störströme reduziert werden.

Nachteilig bei dieser Lösung ist, daß sie für eine Kompensation der Gleichtaktstörungen, die unmittelbar von der getakteten Spannung des Schaltteils hervorgerufen werden - und beispielsweise zu direkt zwischen Schaltteil und der Umgebung fließenden Störströmen führen -, ungeeignet ist.

Die EP-PS 0 264 765 beschreibt einen elektronischen Konverter zum Betrieb von Niedervolt-Halogenglühlampen, der eine stromkompensierte Drossel zur Funkentstörung aufweist. Außerdem ist die Sekundärseite des Leistungsübertragers - dieser dient als Auskoppelkreis, der die getaktete Spannung des Schaltteils auf die Nennspannung der angeschlossenen Niedervolt-Halogenglühlampe transformiert - über einen Kondensator mit dem Plus- oder Minuspol des Netz-Gleichrichters verbunden. Dadurch wird ein HF-Kurzschluß erzeugt, der Störspannungen über dem Leistungsübertrager klein hält. Diese Maßnahme ist allerdings auf elektronische Konverter beschränkt.

In der DE-OS 41 37 207 ist eine HF-Entstörung offenbart, die ebenfalls auf einem HF-Kurzschluß beruht und prinzipiell sowohl bei EVG's als auch bei elektronischen Konvertern eingesetzt werden kann. Dazu wird ein HF-Signal, im Falle eines EVG's beispielsweise aus dem Serienresonanzkreis der Entladungslampe ausgekoppelt und über einen Hochpaß mit einer in die Netzzuleitungen geschalteten Entstördrossel verbunden. Bei optimaler Dimensionierung des Hochpaßes fließen nahezu keine Störströme über die Netzzuleitungen. Allerdings ändert sich die HF-Impedanz der Entstördrossel in Abhängigkeit vom Wert des sie durchfließenden Eingangsstroms. Dadurch ändert sich die Enstörwirkung empfindlich mit der angeschlossenen Last.

Der Erfindung liegt die Aufgabe zugrunde, die genannten Nachteile zu beseitigen und getaktete Stromversorgungen zum Betreiben elektrischer Lampen anzugeben, deren leitungsgebundene Gleichtakt-Funkstörungen die Grenzwerte einschlägiger Bestimmungen unterschreiten. Außerdem soll die Funkentstörschaltung eine kompakte Bauweise der Stromversorgung ermöglichen und prinzipiell sowohl für elektronische Konverter als auch für elektronische Vorschaltgeräte geeignet sein. Ein weiterer Teil der Aufgabe ist es, eine besonders wirtschaftliche Lösung mit möglichst wenigen zusätzlichen Bauteilen anzugeben.

Diese Aufgabe wird erfindungsgemäß durch die kennzeichnenden Merkmale des Anspruchs 1 gelöst. Weitere vorteilhafte Ausführungen der Erfindung sind in den Unteransprüchen erläutert.

Der Grundgedanke besteht darin, Störsignale - Störspannungen und Gleichtakt-Störströme - durch eine oder mehrere geeignete steuerbare Zusatzquelle(n) zu kompensieren, indem durch die Zusatzquelle(n) bezüglich der Störsignale invertierte Kompensationssignale erzeugt werden. Durch Überlagerung löschen sich beide Signale gegenseitig idealerweise vollständig aus. Die Wirksamkeit der Kompensation ist durch Amplitude, Frequenz und Zeitverlauf des Kompensationssignals sowie dessen relativer Phasenlage bezüglich des Störsignals beeinflußbar. Diese Einflußgrößen werden in einer gesteuerten Version erfindungsgemäßer getakteter Stromversorgungen fest eingestellt. In einer geregelten Version wird die Regelgröße zweckmäßigerweise aus den Gleichtakt-Störströmen gewonnen, die in den Netzzuleitungen oder den eingangsseitigen Verbindungsleitungen des Schaltteils fließen. Bevorzugt wird die Regelung so eingestellt, daß die genannten Störsignale minimiert werden.

Die steuerbare Zusatzquelle - sie wirkt im wesentlichen als Spannungsquelle - ist parallel zur Störquelle, d.h. zum Schaltteil geschaltet. Die Zusatzquelle ist in Form eines Spannungsgenerators und eines damit verbundenen Koppelelements in der Nähe der Schalter angeordnet und damit ähnlich wie die Störquelle kapazitiv an die Umgebung, z.B. an die Erde gekoppelt. Der von der Störquelle über parasitäre Kapazitäten zur Umgebung fließende Störstrom wird kompensiert, indem durch die Zusatzquelle ein invertierter - ebenfalls über diese parasitären Kapazitäten zur Umgebung fließender - Kompensationsstrom influenziert wird. Dies wird durch gezielte Potentialänderungen der Zusatzquelle erreicht, die zu jenen der Störquelle invertiert sind. Das bedeutet, daß die zeitlichen Verläufe beider Potentialänderungen bis auf eine Phasendrehung von typisch 180° gleich sind.

Optional weisen die von einem Wechselspannungsnetz oder einer Gleichspannungsquelle kommenden Zuleitungen des Schaltteils je eine Zusatzquelle auf. Falls die Speisung der getakteten Stromversorgung von einem Wechselspannungsnetz erfolgt, können die Zusatzquellen wahlweise seriell in die Eingangs- oder Ausgangsleitungen eines Netz-Gleichrichters geschaltet sein. Mittels geeigneter Ansteuerung wird nun gezielt von jeder dieser Zusatzquellen eine Kompensationsspannung erzeugt, die bezüglich der von der Störquelle erzeugten Störspannung invertiert ist. Kompensations- und Störspannung sind so aufeinander abgestimmt, daß sie sich gegenseitig idealerweise vollständig kompensieren und folglich die Entstehung von Gleichtakt-Störströmen vermieden wird. Die phasenstarre Kopplung zwischen Kompensations- und Störsignal wird in beiden Fällen durch ein von der Störquelle gewonnenes Synchronisationssignal sichergestellt, das im Falle der Verwendung eines Gegentaktwandlers z.B. am Mittenpunkt zweier Brückentransistoren abgegriffen wird.

Das Koppelelement der parallelen Zusatzquelle ist durch eine Äquipotentialfläche, d.h. eine elektrisch leitende Fläche, z.B. aus Metall oder leitendem Kunststoff realisiert.

Sie ist mit einem Pol des steuerbaren Spannungsgenerators verbunden und wirkt wie eine Hälfte eines parasitär an die Umgebung gekoppelten Plattenkondensators. Die Äquipotentialfläche ist vorteilhaft in der Nähe des Schaltteils, vorzugsweise auf der Leiterplatine der getakteten Stromversorgung, angeordnet. Dadurch wird sichergestellt, daß eine Änderung parasitärer kapazitiver Kopplungen - etwa durch Anordnung der gesamten Schaltungsanordnung in einem geerdeten Metallgehäuse - für die Störquelle und die Äquipotentialfläche der Zusatzquelle in gleichem Maße erfolgt und folglich die Kompensation näherungsweise erhalten bleibt. Die zur Erzeugung eines Kompensationsstroms erforderlichen Potentialänderungen der Äquipotentialfläche werden durch den mit Hilfe der Steuerschaltung geeignet angesteuerten Spannungsgenerator bewirkt, wobei die Höhe des hierbei influenzierten Kompensationsstroms u.a. durch die geometrischen Abmessungen der Äquipotentialfläche, insbesondere deren Flächeninhalt beeinflußbar ist.

In einer ersten Ausführung besteht die Steuerschaltung aus einer Inverterstufe und einer nachgeschalteten Treiberstufe. Der Eingang der Inverterstufe ist zur Synchronisierung mit dem Schaltteil verbunden. Das invertierte Synchronisationssignal ist über die Treiberstufe dem nachfolgenden steuerbaren Spannungsgenerator zugeführt, der aus einer Gegentaktendstufe besteht. Die Treiberstufe - sie ist bevorzugt mittels Operationsverstärker realisiert - steuert die Komplementärtransistoren der Gegentaktendstufe. Der Ausgang der Gegentaktendstufe ist mit einer Äquipotentialfläche verbunden und ändert deren Potential invers zum Synchronisationssignal. Die Spannungsversorgung für die Gegentaktendstufe ist bevorzugt der Spannungsversorgung des Schaltteils entnommen. Auf diese Weise können auf der Äquipotentialfläche Potentialänderungen erzeugt werden, deren Amplituden jenen der Störquelle entsprechen. Durch geeignete Wahl der Transistoren der Gegentaktendstufe sowie deren Ansteuerung wird sichergestellt, daß die Anstiege der Potentialänderungen mit den steilen Schaltflanken der Transistoren des Schaltteils übereinstimmen. In einer Variante sind die Komplementärtransistoren durch gleichartige Transistoren ersetzt. Allerdings sind in diesem Fall potentialgetrennte Ansteuersignale für die Transistoren erforderlich, wodurch sich Bauteile- und folglich Kostenaufwand erhöhen.

In einer zweiten Ausführung besteht die Steuerschaltung aus der Primär- und der Spannungsgenerator aus der Sekundärwicklung eines Übertragers. Zur Synchronisierung mit dem Störsignal ist die Primärwicklung mit dem Schaltteil verbunden ist. Die Sekundärwicklung ist an ihrem ersten Ende mit einer Äquipotentialfläche und mit ihrem zweiten Ende, dem Fußpunkt mit einem geeigneten Potential der Schaltung so verbunden, daß zusammen mit dem Wicklungssinn des Übertragers eine Invertierung zwischen Synchronisationssignal und Spannungssignal der Sekundärseite erzielt wird. Durch das Übersetzungsverhältnis des Übertragers und die Größe der Äquipotentialfläche kann der Kompensationsstrom beeinflußt werden.

Üblicherweise enthalten getaktete Stromversorgungen induktive Bauteile, die mit dem Schaltteil verbunden sind, z.B. Lampendrosseln in EVG's, Wandlerdrosseln in Sperrwandlern oder Leistungsübertrager in elektronischen Konvertern. In einer bevorzugten Ausführung werden diese induktiven Bauteile gleichzeitig als Steuerschaltung für die steuerbare Zusatzquelle, d.h. als Bestandteil des oben erwähnten Übertragers mitverwendet. In einer besonders bevorzugten Variante für elektronische Konverter ist der Spannungsgenerator als gegensinnige Zusatzwicklung auf dem Kern des Übertragers realisiert, deren erstes Ende mit der Äquipotentialfläche verbunden ist. Dies stellt eine besonders kostengünstige und kompakte Lösung der Funkentstörschaltung dar, da lediglich eine Zusatzwicklung, aber keine zusätzlichen Bauteile erforderlich sind. Die Äquipotentialfläche läßt sich in Gestalt einer Metallfläche durch ein entsprechendes Layout auf der kupferkaschierten Leiterplatine der getakteten Stromversorgung auf einfache Weise und ebenfalls ohne zusätzlichen Kostenaufwand realisieren. Die Fußpunkte der Zusatzwicklung und der Primärwicklung des Übertragers sind bevorzugt miteinander verbunden. Am freien Ende der Zusatzwicklung ist die Metallfläche angeschlossen. Die Kompensation ist außer durch die Größe der Metallfläche noch durch die Windungszahl der Zusatzwicklung und die Wahl des Potentials des Fußpunktes der Zusatzwicklung beeinflußbar.

In einer bevorzugten Ausführung sind die seriellen Zusatzquellen durch die Sekundärwicklungen eines Übertragers - im folgenden als Einspeise-Transformator bezeichnet - realisiert, wobei in jede von einer Spannungsquelle kommende Zuleitung des Schaltteils jeweils eine Sekundärwicklung seriell geschaltet ist. Die Anzahl der Sekundärwicklungen entspricht also der Anzahl der Zuleitungen. Ggf. ist den Zusatzquellen noch ein Netz-Gleichrichter vor- oder nachgeschaltet. Die Steuerschaltung besteht aus der Primärwicklung des Einspeise-Transformators, die mit den Sekundärwicklungen gegensinnig gekoppelt ist. Die Primärwicklung ist - ggf. über eine zusätzliche Impedanz - mit dem Schaltteil, z.B. mit einem Verbindungspunkt der Schalter verbunden. Auf diese Weise induzieren die, die Primärwicklung durchfließenden Synchronisationssignale in den Sekundärwicklungen Kompensationsspannungen, die bezüglich den Störspannungen des Schaltteils invertiert sind. Die Kompensation ist durch Dimensionierung des Einspeise-Transformators (Übersetzungsverhältnis, Wicklungssinn) und ggf. der Zusatzimpedanz beeinflußbar.

Die geregelten Versionen der verschiedenen Ausführungen der erfindungsgemäßen Funkentstörschaltung sind wie im folgenden erläutert realisiert. In die vorstehend beschriebenen Schaltungsanordnungen ist zusätzlich ein Übertrager - im folgenden als Sensor-Transformator bezeichnet - geschaltet. Seine Primärseite besteht aus zwei Wicklungen, die jeweils seriell in die Netzzuleitungen oder die Zuleitungen des Schaltteils geschaltet sind. Die Sekundärseite besteht aus einer Wicklung und ist mit den Eingängen eines Regelverstärkers verbunden. Der Wickelsinn ist dabei so ausgelegt, daß nur Gleichtakt-Störströme auf den Zuleitungen der Primärseite ein nennenswertes, gegenphasiges Signal in der Sekundärwicklung induzieren. Auf die im Fall der parallelgeschalteten gesteuerten Zusatzquelle (Gegentaktendstufe mit Äquipotentialfläche) erforderliche Inverterstufe kann somit in der geregelten Ausführung verzichtet werden. Als Regelverstärker wird die bereits in der gesteuerten Version beschriebene Treiberstufe verwendet. Sie steuert eine nachfolgende Gegentaktendstufe an, die wiederum mit der Äquipotentialfläche verbunden ist. Über die kapazitive Kopplung der Äquipotentialfläche an die Umgebung wird ein Gleichtakt-Kompensationsstrom erzeugt, wodurch der Regelkreis geschlossen ist. Im Falle seriell geschalteter Zusatzquellen sind Gegentaktendstufe und Äquipotentialfläche durch den Einspeise-Transformator ersetzt.

Auf einen entscheidenden Vorteil der Erfindung sei in diesem Zusammenhang nochmals ausdrücklich hingewiesen. Obgleich sowohl die beiden Primärwicklungen des Sensor-Transformators als auch die beiden Sekundärwicklungen des Einspeise-Transformators jeweils als stromkompensierte Drosseln wirken, ist jedoch eine dadurch hervorgerufene Dämpfung von Gleichtakt-Störströmen für die Kompensationswirkung der Funkentstörschaltung nicht notwendig. Für die Leerlaufinduktivitäten der Wicklungen können deshalb Werte gewählt werden, die weit kleiner sind (z.B. 1 mH) als jene herkömmlicher stromkompensierter Drosseln (z.B. 20 mH). Dadurch werden entscheidend kompaktere Abmessungen der Schaltungsanordnung erzielt.

Die Reduzierung der Gleichtakt-Störströme durch die gegenphasigen Ströme (parallele Zusatzquelle) bzw. Spannungen (serielle Zusatzquellen) ist näherungsweise proportional zur Kreisverstärkung des Regelkreises. Die Kreisverstärkung K setzt sich zusammen aus den Übertragungsfaktoren der im Regelkreis geschalteten Transformatoren und der Verstärkung des Regelverstärkers. Für K>50 ergibt sich bereits eine für die einschlägigen Vorschriften ausreichende Reduzierung der Gleichtakt-Störströme. Die Bandbreite der Kreisverstärkung ist so zu wählen, daß das zu erwartende Störspektrum ausgeregelt werden kann.

Die Erfindung wird im folgenden anhand einiger Ausführungsbeispiele näher erläutert. Es zeigen
- Fig. 1: das Schaltbild eines erfindungsgemäßen elektronischen Konverters für Niedervolt-Halogenglühlampen mit einer gesteuerten Funkentstörschaltung, die eine Zusatzwicklung und eine damit verbundene Metallfläche als parallel zur Störquelle geschaltete Zusatzquelle aufweist,
- Fig. 2: das Layout der gemäß der elektrischen Schaltung aus Figur 1 bestückten Leiterplatine,
- Fig. 3a: das nach der Vorschrift CISPR 15 gemessene Störspektrum der elektrischen Schaltung gemäß Figur 2 im Bereich zwischen 150 kHz und 30 MHz, wobei der Leistungsübertrager über ca. 2 m lange Zuleitungen mit einer 100 W Halogenglühlampe verbunden ist,
- Fig. 3b: das Störspektrum entsprechend Figur 3a, aber im Bereich zwischen 50 kHz und 1,4 MHz,
- Fig. 3c: das Störspektrum entsprechend Figur 3a, aber im Bereich zwischen 20 kHz und 160 kHz,
- Fig. 4: das Prinzipschaltbild eines elektronischen Konverters für Niedervolt-Halogenglühlampen mit einer gesteuerten Funkentstörschaltung, die einen Einspeisetransformator als seriell zur Störquelle geschaltete Zusatzquellen aufweist,
- Fig. 5: das Prinzipschaltbild einer gesteuerten Funkentstörschaltung, die eine Gegentaktendstufe und eine damit verbundene Metallfläche als parallel geschaltete Zusatzquelle aufweist,
- Fig. 6: die geregelte Variante der Funkentstörschaltung aus Figur 5,
- Fig. 7: die geregelte Variante der Funkentstörschaltung aus Figur 4.

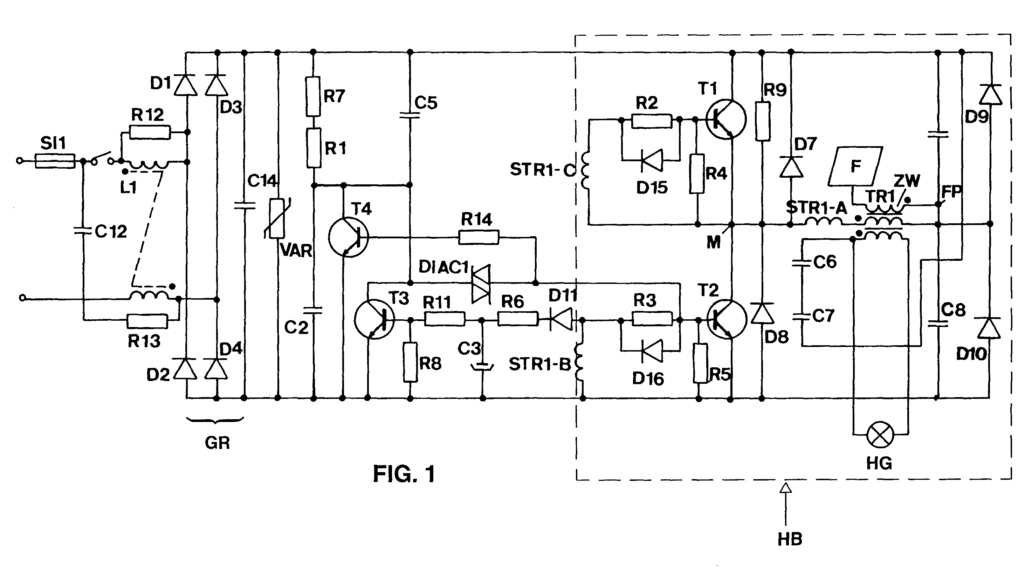

Figur 1 zeigt das Schaltbild eines elektronischen Konverters für 12 V-Halogenglühlampen mit einer maximalen Leistungsaufnahme von 105 W. Im folgenden werden die einzelnen Bauteile erläutert. Der Eingang der Schaltung ist durch die Sicherung SI1 und den Thermoschalter TS1 gegen Überströme sowie Übertemperatur geschützt. Es folgt ein Gegentakt-Entstörfilter, bestehend aus dem X-Kondensator C12 und der Doppel-Drossel L1. Je eine der beiden Wicklungen der Doppel-Drossel L1 ist seriell in je eine der beiden Zuleitungen des Eingangs geschaltet und mit je einem parallelen Widerstand R12, R13 bedämpft. Es folgt ein Netz-Gleichrichter, bestehend aus den Dioden D1-D4 in Brückenschaltung, dessen Ausgang einen parallel geschalteten Siebkondensator C14 und einen Varistor VAR als Überspannungsschutz aufweist. Danach folgt ein selbstschwingender stromrückgekoppelter Wechselrichter in Halbbrückenschaltung. Seine Funktionsweise ist ausführlich in der Patentanmeldung P 44 16 401 beschrieben. Daher werden im folgenden lediglich die einzelnen Funktionsgruppen und Bauteile erläutert. Kernstück ist ein selbstschwingender stromrückgekoppelter Halbbrückenwandler, bestehend im wesentlichen aus den beiden Schalttransistoren T1, T2 - ihnen ist je eine Rückflußdiode D7, D8 parallel geschaltet -, den beiden Brückenkondensatoren C8, C9 mit je einer parallel geschalteten Diode D9, D10, dem Leistungsübertrager TR1, dessen Sekundärwicklung über die Funkentstör-Kondensatoren C6, C7 mit dem Pluspol des Netz-Gleichrichters verbunden ist und an den eine 12V Halogenglühlampe angeschlossen ist sowie einem Steuerübertrager STR1-A bis STR1-C, der die Steuersignale für die Brückentransistoren T1, T2 liefert, welche über je eine Ansteuerbeschaltung, bestehend aus den Widerständen R2, R4 bzw. R3, R5 und der Diode D15 bzw. D16 den Basisanschlüssen der Brückentransistoren T1 bzw. T2 zugeführt sind. Der Halbbrückenwandler wird mittels eines herkömmlichen Triggergenerators gestartet, der im wesentlichen aus den Widerständen R1, R7, dem Ladekondensator C2 sowie dem Diac DIAC1 besteht. Der parallel zum Ladekondensator C2 geschaltete Transistor T4, dessen Basis über den Widerstand R14 mit der Basis des Halbbrückentransistors T2 verbunden ist, verhindert die Entstehung von unerwünschten Triggerimpulsen während der Halbbrückenwandler schwingt. Dieses Merkmal ist bereits in der Patentanmeldung P 44 16 401 offenbart. Eine an sich bekannte Schutzschaltung, bestehend im wesentlichen aus dem Transistor T3, den Kondensatoren C3, C5, der Diode D11 sowie den Widerständen R6, R8 und R11, schützt die Brückentransistoren T1, T2 vor sekundärseitiger Überlast. Die Funkentstörschaltung besteht aus einer Zusatzwicklung ZW auf dem Leistungsübertrager TR1 und einer Metallfläche F. Die Zusatzwicklung ZW und die Primärwicklung des Leistungsübertragers TR1 weisen einen entgegengesetzten Wicklungssinn auf und bestehen jeweils aus 73 Windungen. Sie sind am Fußpunkt FP miteinander verbunden. Das freie Ende der Zusatzwicklung ZW ist mit der Metallfläche F kontaktiert. Auf diese Weise werden die Potentialänderungen des Mittenpunktes M zwischen den beiden Brückentransistoren T1, T2 gegenphasig auf die Metallfläche F übertragen. In der Tabelle 1 sind die verwendeten Bauteile aufgelistet.

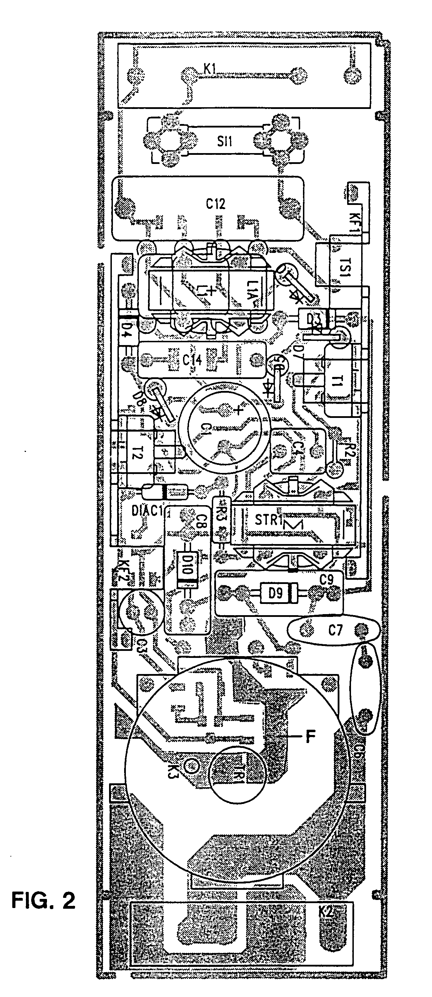

Figur 2 zeigt das Layout der gemäß Figur 1 gefertigten und bestückten Leiterplatine. Bekanntermaßen sind Funkstörungen in hohem Maße von parasitären Kapazitäten sowie Induktivitäten und folglich von den verwendeten Bauteilen, deren räumliche Anordnung und deren elektrische Verbindungen untereinander abhängig. Die Metallfläche F ist daher sorgfältig auf dieses Layout abgestimmt. Die Fertigung der Metallfläche F erfolgt beim Ätzen der Leiterplatine direkt aus der Kupferbeschichtung. Daher fallen weder zusätzliche Herstell- noch zusätzliche Materialkosten an. Es handelt sich hierbei also um eine besonders wirtschaftliche Realisierung der erfindungsgemäßen Entstörschaltung.

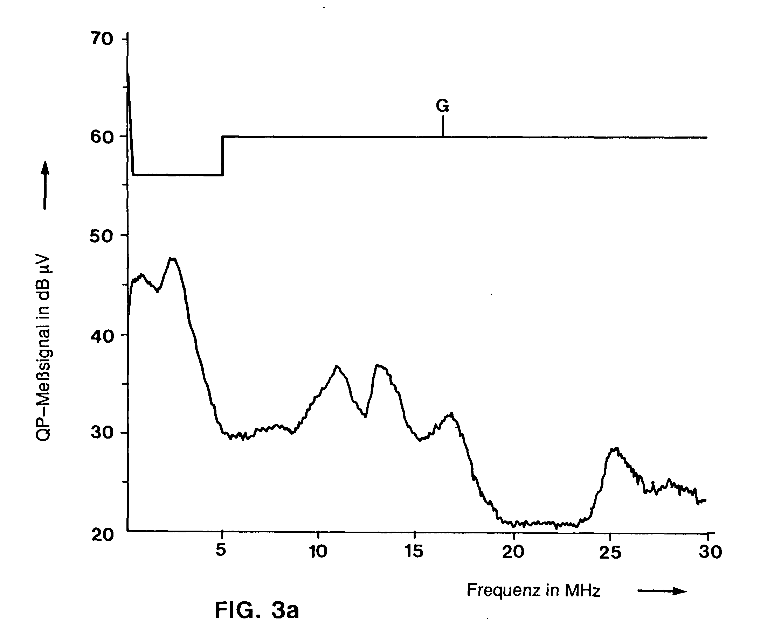

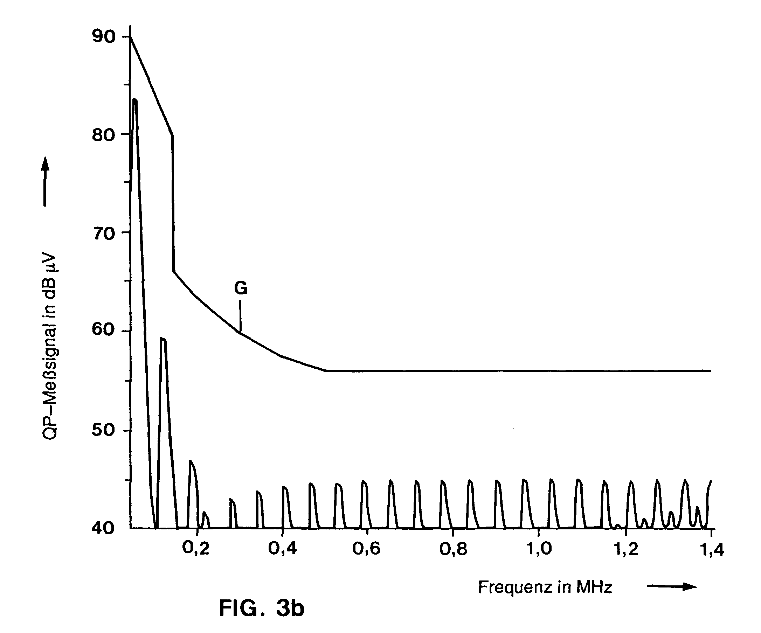

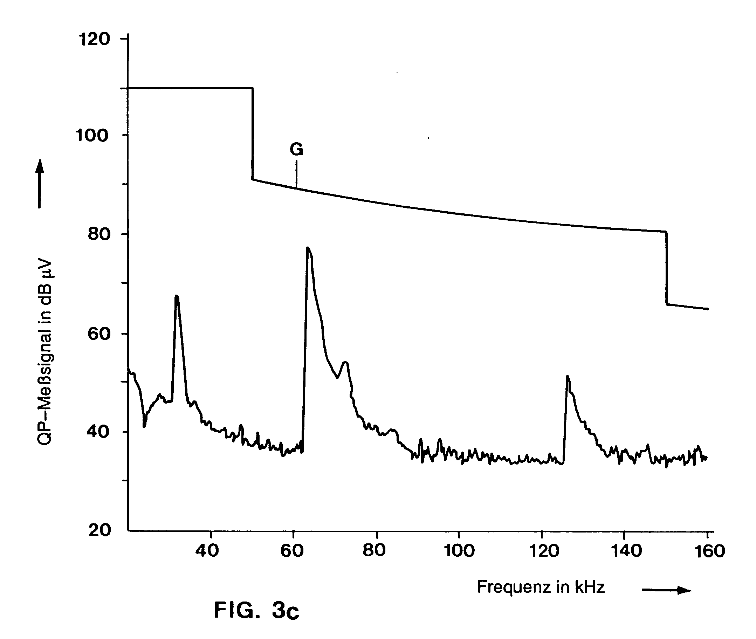

In den Figuren 3a-3b sind die nach der Vorschrift CISPR 15 gemessenen Quasipeak(QP)-Störspektren der elektrischen Schaltung aus Figur 2 dargestellt. Während der Messung wird eine 100 W Halogenglühlampe an ca. 2 m langen, mit der Zusatzwicklung ZW des Leistungsübertragers TR1 verbundenen Zuleitungen betrieben. Deutlich ist zu erkennen, daß die Meßwerte über den gesamten Meßbereich (20 kHz bis 30 MHz) z.T. beträchtlich unterhalb der eingezeichneten jeweiligen Grenzwertlinie G nach CISPR 15 liegen. Figur 3a zeigt den Verlauf des QP-Meßsignals als Funktion der Frequenz im Bereich zwischen 150 kHz und 30 MHz. Die Figuren 3b und 3c zeigen entsprechend die Bereiche zwischen 50 kHz und 1,4 MHz bzw. zwischen 20 kHz und 160 kHz. In der letzten Darstellung sind die Grundfrequenz des Wechselrichters bei ca. 32 kHz und die beiden folgenden Oberschwingungen mit doppelter bzw. vierfacher Grundfrequenz gut zu erkennen.

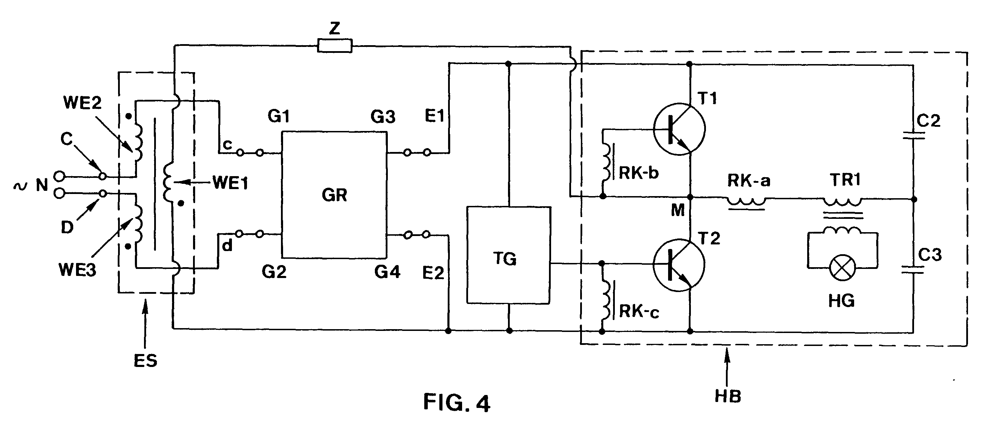

Figur 4 zeigt das Prinzipschaltbild eines elektronischen Konverters mit gesteuerter serieller Zusatzquelle. Die Schaltung besteht aus den Komponenten Einspeise-Transformator ES, Netz-Gleichrichter GR, Triggergenerator TG und selbsterregter stromrückgekoppelter Halbbrückenwandler HB. Der Einspeise-Transformator ES besteht aus einer Primärwicklung WE1 und zwei seriell in die Netzzuleitungen N geschalteten Sekundärwicklungen WE2 und WE3. Der Halbbrückenwandler HB besteht im wesentlichen aus den beiden Brückentransistoren T1 und T2, den beiden Brückenkondensatoren C2 und C3, dem Leistungsübertrager TR1 und dem Steuerübertrager RK-a-RK-c. Gleichrichter GR und Triggergenerator TG entsprechen jenen in Figur 1 und sind der Übersicht wegen lediglich als Funktionsblöcke dargestellt. Die Sekundärwicklungen WE2 und WE3 sind mit ihren ersten Enden C bzw. D mit dem Netz N und mit ihren zweiten Enden c bzw. d mit den Eingängen G1 bzw. G2 des Netz-Gleichrichters GR verbunden. Die Primärwicklung WE1 ist an ihrem ersten Ende mit dem Eingang E2 des Halbbrückenwandlers HB verbunden. Das zweite Ende ist über die Impedanz Z mit dem Mittenpunkt M der beiden Halbbrückentransistoren T1 und T2 kontaktiert. Auf diese Weise fließt in der Primärwicklung WE1 ein zum Störpotential des Mittenpunkts M proportionaler Synchronisationsstrom, der in den Sekundärwicklungen WE2 und WE3 je eine gegenphasige Kompensationsspannung induziert. Deren Amplitude wird mittels der Impedanz Z so auf das Störpotential abgestimmt, daß sich beide Spannungen kompensieren und folglich die Entstehung von Gleichtakt-Störströmen vermieden wird. In einer Variante ist der Einspeise-Transformator ES nicht in die Netzzuleitungen N sondern zwischen Netz-Gleichrichter GR und Eingang des Halbbrückenwandlers HB geschaltet. In diesem Fall sind die Anschlüsse C, D sowie c, d der beiden Sekundärwicklungen des Einspeise-Transformators ES mit den beiden Ausgängen G3, G4 des Netz-Gleichrichters GR bzw. den Eingängen E1 bzw. E2 des Halbbrückenwandlers HB verbunden. Die Anschlüsse der Primärwicklung bleiben unverändert.

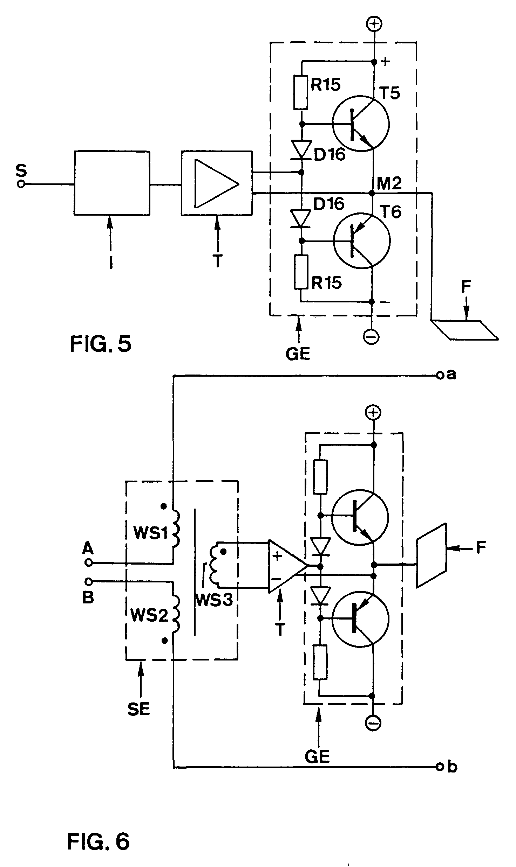

Figur 5 zeigt ein weiteres Ausführungsbeispiel einer gesteuerten Funkentstörschaltung, die eine Gegentaktendstufe GE und eine damit verbundene Metallfläche F als parallel geschaltete Zusatzquelle aufweist. Die Gegentaktendstufe besteht im wesentlichen aus den beiden Komplementärtransistoren T5 und T6 sowie je einer Basisbeschaltung mittels Widerstand R15 und Diode D16. Die Metallfläche F ist mit dem Mittenpunkt M2 zwischen den beiden Komplementärtransistoren T5 und T6 kontaktiert. Die Steuerschaltung besteht aus der Inverterstufe I und der Treiberstufe T und steuert die Gegentaktendstufe an. Diese Funkentstörschaltung kann z.B. im elektronischen Konverter aus Figur 1 eingebaut sein. In diesem Fall kann auf die Zusatzwicklung ZW verzichtet werden. Der Steuereingang S ist mit dem Mittenpunkt M der Brückentransistoren und die Anschlüsse + und - der Spannungsversorgung der Gegentaktendstufe GE sind mit den Ausgänge G3 bzw. G4 des Netz-Gleichrichters GR verbunden.

Figur 6 zeigt ein weiteres Ausführungsbeispiel einer Funkentstörschaltung, die eine Gegentaktendstufe GE und eine damit verbundene Metallfläche F als parallel geschalteter Zusatzquelle aufweist. Im Unterschied zu Figur 5 ist die Schaltung als Regelkreis konzipiert. Dazu ist die Treiberstufe T von der Sekundärwicklung WS3 eines Sensor-Transformators SE gespeist. Die Primärseite des Sensor-Transformators SE weist zwei Wicklungen WS1 und WS2 auf, deren Wicklungssinn so auf die Sekundärwicklung WS3 abgestimmt ist, daß nur primärseitige Gleichtakt-Störströme ein sekundärseitiges Signal erzeugen. Zu diesem Zweck sind die ersten Enden A und B der beiden Primärwicklungen WS1 und WS2 mit den beiden Netzzuleitungen N oder alternativ mit den beiden Ausgängen G3 bzw. G4 des Netz-Gleichrichters GR verbunden. Die beiden anderen Enden a und b der Sekundärwicklungen sind mit den Eingängen G1, G2 des Netz-Gleichrichters GR bzw. alternativ mit den Eingängen E1, E2 des Halbbrückenwandlers HB kontaktiert.

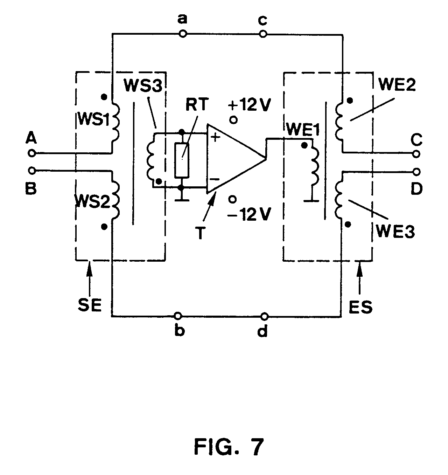

Figur 7 zeigt schließlich ein Ausführungsbeispiel einer geregelten Funkentstörschaltung, in der zwei Sekundärwicklungen eines Übertragers als seriell geschaltete Zusatzquellen verwendet sind. Diese Schaltung weist sowohl einen Sensor-Transformator SE gemäß Figur 6 als auch einen Einspeise-Transformator ES wie in Figur 4 auf. Dabei sind die Anschlüsse a und c bzw. b und d der seriell in die Zuleitungen geschalteten Wicklungen beider Transformatoren miteinander verbunden. Die Sekundärwicklung WS3 des Sensor-Transformators SE ist über die Treiberstufe T mit der Primärwicklung WE1 des Einspeise-Transformators ES verbunden. Die Treiberstufe ist mittels eines Operationsverstärkers realisiert, dessen Eingänge über den Widerstand RT miteinander verbunden sind. Die Schaltung kann beispielsweise dem Netz-Gleichrichter GR vor- oder nachgeschaltet sein. Im ersten Fall werden in Figur 4 die Schnittstellen C, D und c, d aufgetrennt und anstelle des Einspeise-Transformators ES die Anschlüsse A, B und C, D der Schaltung aus Figur 7 mit den Netzzuleitungen N bzw. den Eingängen G1, G2 des Netz-Gleichrichters GR verbunden. Im zweiten Fall werden in Figur 4 die Verbindungen zwischen G3, E1 und G4, E2 aufgetrennt und an dieser Stelle die Anschlüsse A, B und C, D der Schaltung aus Figur 7 mit den Ausgängen G3, G4 des Netz-Gleichrichters GR bzw. den Eingängen E1, E2 des Halbbrückenwandlers verbunden. Der Einspeise-Transformator ES wird aus der Schaltung entfernt und die Schnittstellen C, c sowie D, d miteinander verbunden. Eine Dimensionierung des Regelkreises ist Tabelle 2 zu entnehmen.

Die Erfindung ist nicht auf die angegebenen Ausführungsbeispiele beschränkt. Insbesondere können einzelne Merkmale unterschiedlicher Ausführungsbeispiele auch miteinander kombiniert werden. Außerdem können die angegebenen Wechselrichter auch als Vollbrückenschaltung und/oder der Auskoppelkreis als Resonanzkreis zum Zünden und Betreiben von Entladungslampen realisiert sein, ohne daß die Entstörungsschaltung prinzipiell geändert werden müßte oder ihre vorteilhafte Wirkung verloren ginge. Schließlich ist es auch möglich, die angegebenen Ausführungsbeispiele der Entstörschaltungen ohne prinzipielle Änderungen in andere Realisierungen einer getakteten Stromversorgung, beispielsweise in Drosselwandler (Abwärts-, Aufwärts-, Aufwärts-Abwärtsregler, Inverter), Sperrwandler, Durchflußwandler einzubauen. Ferner können gleichartige oder verschiedene Realisierungen getakteter Stromversorgungen auch in der Art einer Kaskadenschaltung miteinander kombiniert sein, wobei jede einzelne getaktete Stromversorgung ihre eigene Funkentstörschaltung aufweist.

**Tabelle 1:**

| Bauteileliste der Schaltung aus Figur 1 | |
|---|---|
| SI1 | T 1A |
| R1 | 165 kΩ |
| R2, R3 | 3,3 Ω |
| R4, R5 | 100 Ω |
| R6 | 560 Ω |
| R7 | 165 kΩ |
| R8 | 51 kΩ |
| R9 | 330 kΩ |
| R11 | 240 kΩ |
| R12,R13 | 10 kΩ |
| R14 | 1 kΩ |
| C2 | 10 nF; 250 V |
| C3 | 47 µF; 6,3 V |
| C5 | 6,7 nF; 400 V |
| C6,C7 | 470 pF; 2 kV |
| C8,C9 | 88 nF; 400 V |
| C12 | 220 nF; 250V |
| C14 | 150 nF; 400 V |
| D1-D4 | 1N4007 |
| D7-D10 | 1N4937 |
| D11, D14, D15 | LL4148 |
| DIAC1 | NEC, 32V |
| L1 | BVL32 |
| STR1-A-STR1-C | EF16 4,5/15,5/15,5 Wdgen. |
| TR1 | R26 73/73/8 Wdgen. |
| T1, T2 | SGS F343 |
| T3,T4 | BC850C |
| VAR | S10 K250 |

**Tabelle 2:**

| Bauteileliste der Schaltung aus Figur 7 | |
|---|---|
| WS1, WS2 | 2 Wdgen. |
| WS3 | 50 Wdgen. |
| RT | 47 kΩ |
| T | AD 844 |
| WE1 | 5 Wdgen. |
| WE2, WE3 | 50 Wdgen. |

## Patentansprüche

1. Getaktete Stromversorgung zum Betreiben elektrischer Lampen an einem Wechselspannungsnetz oder einer Gleichspannungsquelle, bestehend aus
- optional einem Netz-Gleichrichter (GR),
- einem Schaltteil (HB), welches einen oder mehrere Schalter (T1, T2) zur Erzeugung einer getakteten Spannung enthält und welches aufgrund unvermeidlicher Streukapazitäten auch als kapazitiv an die Umgebung gekoppelte Störquelle wirkt,
- einer Funkentstörschaltung zur Verminderung von durch das Schaltteil erzeugten Störsignalen, wobei die Funkentstörschaltung eine oder mehrere gesteuerte und/oder geregelte Zusatzquelle(n) (ZW,F; GE, F) sowie eine mit dem Schaltteil zur Synchronisierung der Zusatzquelle(n) verbundene Steuerschaltung (TR1; I, T) und ggf. eine Regelschaltung (SE, T) aufweist, wobei Zusatzquelle(n) und Steuer- bzw. Regelschaltung einen Inverter beinhalten, wodurch pro Zusatzquelle (ZW,F; GE, F) je ein Kompensationssignal erzeugt wird, welches bezüglich des vom Schaltteil erzeugten Störsignals invertiert ist, und wobei die Zusatzquelle(n) parallel zur Störquelle geschaltet ist (sind), wodurch eine Kompensation zwischen Störsignal und Kompensationssignal erreicht wird,
- einer Ansteuerung (TG; STR1-A-STR1-C; RK-a-RK-c) bzw. Regelung für das Schaltteil (HB),
- einem Auskoppelkreis (TR1), an den mittelbar, über ggf. eine oder mehrere nachgeschaltete weitere getaktete Stromversorgung(en), oder unmittelbar mindestens eine elektrische Lampe (HG) angeschlossen ist,
dadurch gekennzeichnet, daß die Zusatzquelle einen steuerbaren Spannungsgenerator (ZW; GE) und eine damit verbundene und in der Nähe des Schaltteils (HB) angeordnete elektrisch leitende Fläche (F) (Äquipotentialfläche) aufweist, welche Äquipotentialfläche wie eine Hälfte eines parasitär an die Umgebung gekoppelten Plattenkondensators wirkt, wobei die Potentialänderungen der Fläche (F) bezüglich der Potentialänderungen des Abgriffs (M) im Schaltteil (HB) invertiert sind.

2. Getaktete Stromversorgung nach Anspruch 1, dadurch gekennzeichnet, daß die Steuerschaltung mit einem Abgriff (M) eines oder mehrerer Schalter (T1, T2) des Schaltteils verbunden ist, wodurch der Steuerschaltung (TR1; Z) ein für die Synchronisierung erforderliches Synchronisationssignal zugeführt ist.

3. Getaktete Stromversorgung nach Anspruch 2, dadurch gekennzeichnet, daß, im Falle der Realisierung der Stromversorgung mittels Brückenschaltung (HB), als Abgriff der Verbindungspunkt (M) zweier Brückentransistoren (T1;T2) verwendet ist.

4. Getaktete Stromversorgung nach einem der Ansprüche 1 bis 3, dadurch gekennzeichnet, daß die Fläche (F) Teil einer Leiterplatine ist, auf der die getaktete Stromversorgung aufgebaut ist, wobei Flächeninhalt und Formgebung so auf das Layout der Leiterplatine und die verwendeten Bauteile abgestimmt ist, daß eine Minimierung der Störsignale erzielt wird.

5. Getaktete Stromversorgung nach einem der vorstehenden Ansprüche, dadurch gekennzeichnet, daß die Steuerschaltung außer des Inverters (I) zusätzlich eine Treiberstufe (T) aufweist und daß der mit der Steuerschaltung verbundene Spannungsgenerator eine Endstufe (GE) aufweist, wobei der Inverter (I) vom Synchronisationssignal gespeist ist und die von der Treiberstufe (T) angesteuerte Endstufe (GE) mit der Äquipotentialfläche (F) verbunden ist.

6. Getaktete Stromversorgung nach einem der Ansprüche 1 bis 4, dadurch gekennzeichnet, daß als Inverter ein Übertrager (TR1) verwendet ist, wobei die Primärwicklung des Übertragers (TR1) vom Synchronisationssignal gespeist ist und die Sekundärwicklung des Übertragers (TR1) mit der Äquipotentialfläche (F) verbunden ist, wodurch die Primärwicklung als Steuerschaltung und die Sekundärwicklung als Spannungsgenerator fungiert.

7. Getaktete Stromversorgung nach Anspruch 6, dadurch gekennzeichnet, daß der Auskoppelkreis aus einem Leistungsübertrager (TR1) besteht, der außerdem als Übertrager zur Realisierung von Steuerschaltung und Spannungsgenerator dient und dessen Primärseite mit dem Schaltteil und dessen Sekundärseite mit mindestens einer Glühlampe (HG) verbunden ist, wobei die Sekundärseite des Leistungsübertragers eine Zusatzwicklung (ZW) aufweist, deren erstes Ende mit der Äquipotentialfläche (F) verbunden ist und deren zweites Ende mit einem Punkt (FP) der getakteten Stromversorgung kontaktiert ist, wobei der

8. Getaktete Stromversorgung nach Anspruch 1, dadurch gekennzeichnet, daß die getaktete Stromversorgung so viele seriell zur Störquelle geschaltete Zusatzquellen (WE2; WE3) aufweist wie vom Wechselspannungsnetz (N) oder von der Gleichspannungsquelle kommende Zuleitungen mit der getakteten Stromversorgung verbunden sind, wobei in jede Zuleitung jeweils eine Zusatzquelle (WE2; WE3) seriell geschaltet ist und wobei ggf. den Zusatzquellen (WE2; WE3) ein Netz-Gleichrichter (GR) wahlweise vor- oder nachgeschaltet ist.

9. Getaktete Stromversorgung nach Anspruch 8, dadurch gekennzeichnet, daß die Zusatzquellen durch die Sekundärwicklungen (WE2, WE3) eines gleichzeitig als Inverter fungierenden Einspeise-Transformator (ES) realisiert sind, dessen Primärwicklung (WE1) vom Synchronisationssignal gespeist ist.

10. Getaktete Stromversorgung nach Anspruch 9, dadurch gekennzeichnet, daß das Synchronisationssignal über eine Impedanz (Z) der Primärwicklung (WE1) des Einspeise-Transformators (ES) zugeführt ist.

11. Getaktete Stromversorgung nach einem oder mehreren der vorstehenden Ansprüche, dadurch gekennzeichnet, daß die Funkentstörschaltung zusätzlich einen Sensor-Transformator (SE) und einen Regelverstärker (T; T, WE1) enthält, wobei die Wicklungen (WS 1, WS2) der Primärseite des Sensor-Transformators (SE) in die vom Wechselspannungsnetz (N) oder von der Gleichspannungsquelle kommenden Zuleitungen der getakteten Stromversorgung geschaltet sind und wobei ggf. den Wicklungen (WS1, WS2) der Primärseite des Sensor-Transformators (SE) ein Netz-Gleichrichter (GR) wahlweise vor- oder nachgeschaltet ist und die Sekundärwicklung (WS3) des Sensor-Transformators (SE) mit dem Regelverstärker (T; T, WE1) verbunden ist, der seinerseits die Zusatzquelle(n) (GE, F; WE2; WE3) ansteuert, wodurch die Funkentstörschaltung, zusammen mit kapazitiven Kopplungen an die Umgebung über parasitäre Kapazitäten, einen geschlossenen Regelkreis aufweist.

## Claims

1. Pulsed power supply for operating electrics lamps from an AC mains network or a DC voltage source, comprising
- optionally a mains rectifier (GR)
- a switching section (HB) which contains one or more switches (T1, T2) in order to produce a pulsed voltage and which also acts as an interference source which is capacitively coupled to the environment owing to unavoidable stray capacitances,
- a radio suppression circuit in order to prevent interference signals which are produced by the switching section, with the radio suppression circuit having one or more controlled and/or regulated additional source or sources (ZW, F; GE, F), an open-loop control circuit (TR1; I, T) connected to the switching section for synchronization of the additional source or sources and, possibly, a closed-loop control circuit (SE, T) with the additional source or sources and the open-loop and closed-loop control circuits containing an inverter, as a result of which a compensation signal is in each case produced per additional source (ZW, F; GE, F), which compensation signal is inverted with respect to the interference signal produced by the switching section, and with the additional source or sources being connected in parallel with the interference source, thus achieving compensation between the interference signal and the compensation signal,
- a drive (TG; STR1-A-STR1-C; RK-a-RK-c) or regulator for the switching section (HB),
- an output coupling circuit (TR1), to which at least one electrical lamp (HG) is connected either directly or indirectly, possibly via one or more further downstream pulsed power supply or supplies,
characterized in that the additional source has a controllable voltage generator (ZW; GE) and an electrically conductive surface (F) (equipotential surface) which is connected to the said generator, is arranged in the vicinity of the switching section (HB) and acts as half a plate capacitor which is parasitically coupled to the environment, with the potential changes on the surface (F) being inverted with respect to the potential changes at the tapping point (M) in the switching section (HB).

2. Pulsed power supply according to Claim 1, characterized in that the control circuit is connected to a tapping point (M) of one or more switches (T1, T2) in the switching section, by which means the open-loop control circuit (TR1; Z) is supplied with a synchronization signal which is required for synchronization.

3. Pulsed power supply according to Claim 2, characterized in that, if the power supply is in the form of a bridge circuit (HB), the connection point (M) between two bridge transistors (T1; T2) is used as the tapping point.

4. Pulsed power supply according to one of Claims 1 to 3, characterized in that the surface (F) is part of a printed circuit board on which the pulsed power supply is constructed, with the surface content and shape being matched to the layout of the printed circuit board, and to the components which are used so as to minimize the interference signals.

5. Pulsed power supply according to one of the preceding claims, characterized in that the open-loop control circuit also has a driver stage (T) in addition to the inverter (I) and in that the voltage generator which is connected to the open-loop control circuit has an output stage (GE), with the inverter (I) being fed from the synchronization signal, and the output stage (GE) which is driven by the driver state (T) being connected to the equipotential surface (F).

6. Pulsed power supply according to one of Claims 1 to 4, characterized in that a transformer (TR1) is used as the inverter, with the primary winding of the transformer (TR1) being fed from the synchronization signal, and the secondary winding of the transformer (TR1) being connected to the equipotential surface (F), as a result of which the primary winding acts as the open-loop control circuit and the secondary winding acts as the voltage generator.

7. Pulsed power supply according to Claim 6, characterized in that the output coupling circuit comprises a power transformer (TR1) which is also used as a transformer to provide the open-loop control circuit and the voltage generator and whose primary is connected to the switching section, with the secondary being connected to at least one incandescent lamp (HG), with the secondary of the power transformer having an additional winding (ZW) whose first end is connected to the equipotential surface (F) and whose second end makes contact with a point (FP) in the pulsed power supply, and with the point (FP) being at a potential such that a compensation current, which is capacitively coupled to the environment and is inverted with respect to the common-mode interference currents, flows over the equipotential surface (F).

8. Pulsed power supply according to Claim 1, characterized in that the pulsed power supply has the same number of additional sources (WE2; WE3) connected in series to the interference source as the number of supply lines coming from the AC mains network (N) or from the DC voltage source which are connected to the pulsed power supply, with an additional source (WE2; WE3) being connected in series in each supply line, and, possibly, with a mains rectifier (GR) optionally being connected upstream or downstream of the additional sources (WE2; WE3).

9. Pulsed power supply according to Claim 8, characterized in that the additional sources are provided by the secondary windings (WE2, WE3) of a feeder transformer (ES) which at the same time acts as an inverter and whose primary winding (WE1) is fed from the synchronization signal.

10. Pulsed power supply according to Claim 9, characterized in that the synchronization signal is supplied via an impedance (Z) to the primary winding (WE1) of the feed transformer (ES).

11. Pulsed power supply according to one or more of the preceding claims, characterized in that the radio suppression circuit also contains a sensor transformer (SE) and a control amplifier (T; T, WE1), with the windings (WS1, WS2) on the primary of the sensor transformer (SE) being connected in the supply lines, which come from the AC mains network (N) or from the DC voltage source, of the pulsed power supply and, possibly, with a mains rectifier (GR) optionally being connected upstream or downstream of the winding (WS1, WS2) on the primary of the sensor transformer (SE), and the secondary winding (WS3) of the sensor transformer (SE) being connected to the control amplifier (T; T, WE1) which, for its part, drives the additional source or sources (GE, F; WE2; WE3), as a result of which the radio suppression circuit, together with capacitive couplings to the environment via parasitic capacitance, has a closed control loop.

## Revendications

1. Alimentation électrique à découpage pour faire fonctionner des lampes électriques sur un réseau de tension alternative ou sur une source de tension continue constituée de
- éventuellement un redresseur (GR) de réseau,
- une partie (HB) de commutation qui comporte un commutateur ou plusieurs commutateurs (T1, T2) de production d'une tension découpée et qui agit, en raison de capacités parasites inévitables, également en tant que source parasite couplée de manière capacitive à ce qui l'entoure,
- un circuit d'antiparasitage destiné à diminuer les signaux parasites produits par la partie de commutation, le circuit d'antiparasitage comprenant une source ou plusieurs sources (ZW,F ; GE, F) supplémentaires commandées et/ou réglées, ainsi qu'un circuit (TR1; I, T) de commande relié à la partie de commutation pour la synchronisation de la source ou des sources supplémentaires, et le cas échéant un circuit (SE, T) de régulation, la source ou les sources supplémentaires et le circuit de commande ou de régulation comportant un inverseur grâce auquel il est produit pour chaque source (ZW,F; GE, F) supplémentaire respectivement un signal de compensation qui est inversé par rapport au signal parasite produit par la partie de commutation et la (les) source(s) supplémentaire(s) étant montée(s) en parallèle à la source parasite, ce qui permet d'obtenir une compensation entre le signal parasite et le signal de compensation,
- une commande (TG; STR1-A-STR1-C ; RK-a-RK-c) ou une régulation pour la partie de commutation (HB),
- un circuit (TR1) de découplage auquel est raccordée indirectement, par l'intermédiaire éventuellement d'une autre alimentation ou d'autres alimentations en courant à découpage qui sont montés en aval, ou directement au moins d'une lampe (HG) électrique,
caractérisée en ce que la source supplémentaire a un générateur (ZW; GE) de tension qui peut être commandé et comporte une surface (F) (surface équipotentielle) conductrice de l'électricité qui y est reliée et qui est disposée à proximité de la partie (HB) de commutation, la surface équipotentielle agissant comme une moitié d'un condensateur à plaques couplée de manière parasite à ce qui est autour, les variations de potentiel de la surface (F) étant inversées par rapport aux variations de potentiel de la prise (M) de la partie (HB) de commutation.

2. Alimentation électrique à découpage suivant la revendication 1, caractérisée en ce que le circuit de commande est relié à une prise (M) d'un ou plusieurs commutateurs (T1, T2), un signal de synchronisation nécessaire à la synchronisation étant envoyé au circuit (TR1; Z) de commande.

3. Alimentation électrique à découpage suivant la revendication 2, caractérisée en ce que dans le cas où l'alimentation électrique est réalisée au moyen de circuit (HB) à pont, le point (M) de liaison de deux transistors (T1;T2) en pont est utilisée comme prise.

4. Alimentation électrique à découpage suivant l'une des revendications 1 à 3, caractérisée en ce que la surface (F) fait partie d'une plaquette à circuit imprimé sur laquelle est appliquée l'alimentation électrique à découpage, ce que contient la surface et sa forme étant adaptés au layout de la plaquette à circuit imprimé et aux composants utilisés de manière à minimiser les signaux parasites.

5. Alimentation électrique à découpage suivant l'une des revendications précédentes, caractérisée en ce que le circuit de commande comporte, outre l'inverseur (I), en plus un étage (T) d'attaque et en ce que le générateur de tension relié au circuit de commande comporte un étage (GE) d'extrémité, l'inverseur (I) étant alimenté par le signal de synchronisation et l'étage (GE) d'extrémité commandé par l'étage (T) d'attaque étant relié à la surface (F) équipotentielle.

6. Alimentation électrique suivant l'une des revendications 1 à 4, caractérisée en ce qu'il est utilisé comme inverseur un transformateur (TR1), l'enroulement primaire du transformateur (TR1) étant alimenté par le signal de synchronisation et l'enroulement secondaire du transformateur (TR1) étant relié à la surface (F) équipotentielle, grâce à quoi l'enroulement primaire fait office de circuit de commande et l'enroulement secondaire de générateur de tension.

7. Alimentation électrique suivant la revendication 6, caractérisée en ce que le circuit de découplage est constitué d'un transformateur (TR1) de puissance qui sert en outre de transformateur pour la réalisation du circuit de commande et du générateur de tension, et dont le côté primaire est relié à la partie de commutation et dont le côté secondaire est relié à au moins une lampe(HG) à incandescence, le côté secondaire du transformateur de puissance comportant un enroulement (ZW) supplémentaire dont la première extrémité est reliée à la surface (F) équipotentielle et dont la deuxième extrémité est en contact avec un point (FP) de l'alimentation électrique à découpage, le point (FP) ayant un potentiel tel qu'il passe par la surface (F) équipotentielle un courant de compensation couplé capacitivement à ce qui l'entoure et inversé par rapport aux courants parasites en phase.

8. Alimentation électrique suivant la revendication 1, caractérisée en ce que l'alimentation électrique à découpage comporte autant de sources (WE2; WE3) supplémentaires montées en série à la source parasite qu'il y a de lignes venant du réseau (N) de tension alternative ou de la source de tension continue qui sont reliées à l'alimentation électrique à découpage et il est monté en série, dans chaque ligne, respectivement une source (WE2 ; WE3) supplémentaire et, éventuellement, il est monté, au choix en amont ou en aval des sources (WE2; WE3) supplémentaires, un redresseur (GR) de réseau.

9. Alimentation électrique suivant la revendication 8, caractérisée en ce que les sources supplémentaires sont réalisées par les enroulements (WE2, WE3) secondaires d'un transformateur (ES) à une seule alimentation dont l'enroulement (WE1) primaire reçoit le signal de synchronisation.

10. Alimentation électrique suivant la revendication 9, caractérisée en ce que le signal de synchronisation est envoyé par une impédance (Z) au circuit (WE1) primaire du transformateur (ES) à une seule alimentation.

11. Alimentation électrique suivant l'une ou plusieurs des revendications précédentes, caractérisée en ce que le circuit d'antiparasitage comporte en outre un transformateur-détecteur (SE) et un amplificateur (T ; T, WE1) de régulation, les enroulements (WS1, WS2) du côté primaire du transformateur-capteur (SE) étant montés dans les lignes de l'alimentation électrique à découpage venant du réseau (N) de tension alternative ou de la source de tension continue et un redresseur (GR) de réseau étant monté au choix en amont ou en aval éventuellement des enroulements (WS1, WS2) du côté primaire du transformateur-capteur (SE) et l'enroulement (WS3) secondaire du transformateur-capteur (SE) étant relié à l'amplificateur (T ; T, WE1) de régulation qui, de son côté, commande la source ou les sources (GE, F ; WE2; WE3) supplémentaires, grâce à quoi le circuit d'antiparasitage présente, ensemble avec des couplages capacitifs à ce qui l'entoure, par l'intermédiaire de capacités parasites, un circuit de régulation fermé.
